(19)

Europäisches
Patentamt
European
Patent Office
Office européen
des brevets

(11)  **EP 3 023 743 A1**

(12)  **EUROPEAN PATENT APPLICATION**

(43) Date of publication:
25.05.2016 Bulletin 2016/21

(51) Int Cl.:
*G01D 5/04* (2006.01)     *G01D 5/14* (2006.01)

(21) Application number: 15194454.3

(22) Date of filing: 13.11.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.11.2014 US 201414547236**

(71) Applicant: **Steering Solutions IP Holding Corporation**
**Saginaw, MI 48601 (US)**

(72) Inventors:
• TARUM, Carl D.
  **Saginaw, MI Michigan 48603 (US)**
• KIDDER, Keith A.
  **Saginaw, MI Michigan 48609 (US)**

(74) Representative: **Manitz, Finsterwald & Partner GbR**
  **Martin-Greif-Strasse 1**
  **80336 München (DE)**

(54)  **HANDWHEEL POSITION DETECTION SYSTEM**

(57)    A system for detecting a vehicle handwheel position is provided. The system includes a motor shaft including a first gear having a first magnet and a first plurality of teeth, a second gear having a second magnet and a second plurality of teeth, the second plurality of teeth meshingly engaged with the first plurality of teeth, and a third gear having a third magnet and a third plurality of teeth, the third plurality of teeth meshingly engaged with the first plurality of teeth. The system further includes at least one magnetic sensor operably associated with the first magnet, the second magnet, and the third magnet. The at least one magnetic sensor is configured to detect the positions of the first gear, the second gear, and the third gear.

FIG. 2

EP 3 023 743 A1

**Description**

FIELD OF THE INVENTION

The subject invention relates to a steering system, and more particularly, to a steering system for detecting a handwheel position.

BACKGROUND OF THE INVENTION

In an electric power steering (EPS) system, it may be desirable to provide the absolute handwheel position. This position may be used, for example, to cause the handwheel to return to center following a steering input. The return to center function simulates the self-aligning torque due to positive caster of a conventional manual steering system and causes the vehicle to be more comfortably controlled by a driver. To determine the center, absolute handwheel position information may be used.

However, known systems for determining absolute handwheel angle may reset or lose their position (relative to a zero position) if, for example, power to the system is disconnected and the handwheel is moved. Accordingly, it is desirable to provide a system to determine absolute handwheel position after a power loss.

SUMMARY OF THE INVENTION

In one aspect of the invention, a system for detecting a vehicle handwheel position is provided. The system includes a motor shaft including a first gear having a first magnet and a first plurality of teeth, a second gear having a second magnet and a second plurality of teeth, the second plurality of teeth meshingly engaged with the first plurality of teeth, and a third gear having a third magnet and a third plurality of teeth, the third plurality of teeth meshingly engaged with the first plurality of teeth. The system further includes at least one magnetic sensor operably associated with the first magnet, the second magnet, and the third magnet. The at least one magnetic sensor is configured to detect the positions of the first gear, the second gear, and the third gear.

In another aspect of the invention, a steering system is provided. The steering system includes an input shaft coupled to a handwheel, a steering assist motor coupled to the input shaft, the steering assist motor including a motor shaft, and a position sensor assembly operably associated with the steering assist motor. The position sensor assembly includes a first gear having a first plurality of teeth, the first gear coupled to the motor shaft, a second gear having a second plurality of teeth, and a third gear having a third plurality of teeth. The position sensor assembly further includes a sensor operably associated with the first gear, the second gear, and the third gear, the sensor configured to detect the positions of the first gear, the second gear, and the third gear.

In yet another aspect of the invention, method of determining an absolute rotational position of a vehicle handwheel is provided. The method includes monitoring the rotational position of a first gear coupled to a steering assist motor shaft, the first gear having a first plurality of teeth, monitoring the rotational position of a second gear having a second plurality of teeth meshingly engaged with the first plurality of teeth, and monitoring the rotational position of a third gear having a third plurality of teeth meshingly engaged with the first plurality of teeth. The method further includes determining the absolute rotational position of the vehicle handwheel based on the rotational positions of the first gear, the second gear, and the third gear.

These and other advantages and features will become more apparent from the following description taken in conjunction with the drawings.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is a schematic illustration of an exemplary steering system of a vehicle; and

FIG. 2 is a schematic illustration of an exemplary position sensor assembly that may be used with the steering system shown in FIG. 1.

DETAILED DESCRIPTION

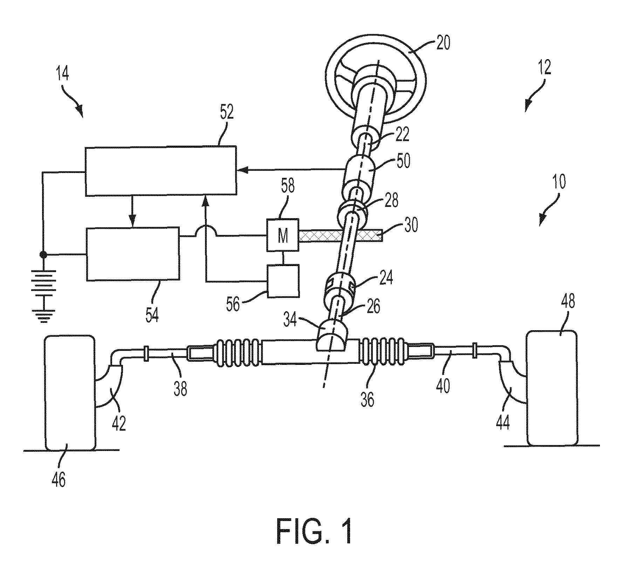

Referring now to the Figures, where the invention will be described with reference to specific embodiments, without limiting same, an exemplary embodiment of a vehicle 10 having a steering system 12 and a control system 14 is illustrated in FIG. 1.

Steering system 12 is provided to steer vehicle 10 in a desired direction and generally includes a handwheel 20, an upper steering column 22, a universal joint 24, a lower steering column 26, a worm gear 28, a worm 30, a gear housing 34, a steering mechanism 36, tie rods 38, 40, steering knuckles 42, 44, and road wheels 46, 48.

In one exemplary embodiment, steering system 12 is an electric power steering system that utilizes a rack and pinion steering mechanism 36, which includes a toothed rack (not shown) and a pinion gear (not shown) located under gear housing 34. During operation, as handwheel 20 is turned by a vehicle operator, upper steering column 22 is connected to lower steering column 26 and turns the pinion gear. Rotation of the pinion gear moves the toothed rack, which moves tie rods 38, 40. Tie rods 38, 40 in turn move respective steering knuckles 42, 44, which turn the respective road wheels 46, 48.

It should be noted that vehicle handwheel 20 has two predetermined steering travel limits. The first predetermined steering travel limit is a full clockwise steering travel limit. The second predetermined steering travel limit is a full counterclockwise steering travel limit. The first and second predetermined steering travel limits can be quantified in angular degrees or radians. For example, handwheel 20 may rotate five full revolutions (or approximately 1800°) between the first and second predetermined steering travel limits.

Control system 14 is provided to assist in controlling steering system 12 and to determine an absolute rotational position of vehicle handwheel 20. Control system 14 includes a column torque sensor 50, a controller 52, a motor control circuit 54, a position sensor assembly 56, and a steering assist motor 58.

Steering column torque sensor 50 is provided to generate a signal indicative of an amount of torque being applied to vehicle handwheel 20 and upper steering column 22 by a vehicle operator. In one exemplary embodiment, torque sensor 50 includes a torsion bar (not shown) which outputs a variable-resistance to controller 52 based on an amount of twist of the torsion bar. Alternatively, other types of torque sensors known to those skilled in the art could be utilized.

Controller 52 is provided to generate control signals that are received by motor control circuit 54 for controlling operation of steering assist motor 58. Controller 52 is further configured to determine an absolute rotational position of handwheel 20, as described herein in more detail. Controller 52 is electrically coupled to torque sensor 50, motor control circuit 54, and position sensor assembly 56. As used herein, the term controller refers to an application specific integrated circuit (ASIC), an electronic circuit, a processor (shared, dedicated, or group) and memory that executes one or more software or firmware programs, a combinational logic circuit, and/or other suitable components that provide the described functionality.

Motor control circuit 54 is provided to receive command torque control signals from controller 52 and to generate electrical currents for controlling operation of steering assist motor 58. Motor 58 is configured to drive worm 30, which is operably coupled to worm gear 28 for moving lower steering column 26, steering mechanism 36, tie rods 38, 40, and knuckles 42, 44 toward an operational position wherein road wheels 46, 48 have a desired front road wheel angle.

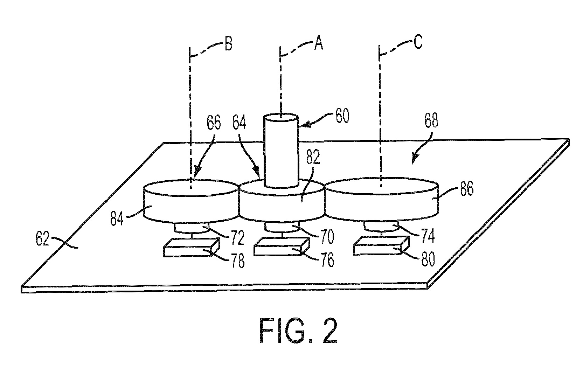

With reference to FIG. 2, position sensor assembly 56 is provided to generate a signal indicative of a relative rotational or angular position of a rotor or shaft 60 of steering assist motor 58 (FIG. 1), which is further indicative of a relative rotational position of handwheel 20. Position sensor assembly 56 operably communicates with controller 52.

In the exemplary embodiment, steering assist motor 58 includes shaft 60 and motor control circuit 54 includes a motor controller circuit board 62 for controlling operation of motor 58. Position sensor assembly 56 includes a first gear 64, a second gear 66, and a third gear 68, which respectively include, and in the embodiment shown, are connected to a first puck magnet 70, a second puck magnet 72, and a third puck magnet 74. Magnets 70, 72, 74 may be any suitable type of magnet that enables position sensor assembly 56 to function as described herein. Magnets 70, 72, 74 are respectively operably associated with a first magnetic sensor 76, a second magnetic sensor 78, and a third magnetic sensor 80. However, assembly 56 may have any number of magnetic sensors that enables the assembly to function as described herein.

First gear 64 is coupled to motor shaft 60 for rotation about an axis 'A' and includes a plurality of first gear teeth 82. Second gear 66 includes a plurality of second gear teeth 84 meshingly engaged with first gear teeth 82 and is configured for rotation about an axis 'B'. Third gear 68 includes a plurality of third gear teeth 86 meshingly engaged with first gear teeth 82 and is configured for rotation about an axis 'C'.

Magnetic field sensors 76, 78, 80 are provided for respectively detecting the position (e.g., angular position) of magnets 70, 72, 74, which facilitates determining the position (e.g., angular position) of gears 64, 66, 68. The magnetic sensors may be any type of sensors for detecting the angular positions of magnets 70, 72, 74 such as, for example, a Hall effect sensor. Controller 52 is in communication with magnetic sensors 76, 78, 80. Alternatively, other types of position sensors known to those skilled in the art could be utilized (e.g., optical sensors).

In an exemplary embodiment, first gear 64 is an eight-toothed gear, second gear 66 is a nine-toothed gear, and third gear 68 is an eleven-toothed gear. However, gears 64, 66, 68 may have any other gear ratios that enable position sensor assembly 56 to function as described herein. In one embodiments, gears 64, 66, 68 do not have the same number of teeth. In other embodiments, other mechanizations may be used for gears such as, for example, toothed belts or internal ring gears.

As noted, the exemplary embodiment includes eight, nine, and eleven teeth for respective gears 64, 66, 68. The gear ratios are selected such that cyclic repetition of the angles of the three gears 64, 66, 68 will not match more than once over the design travel of the assembly (i.e., between the first and second predetermined steering travel limits). Nine toothed (9T) spur gear 66 and eight toothed (8T) gear 64 will repeat every nine turns of motor shaft 60, and the eleven toothed (11T) spur gear 68 and 8T gear 64 will repeat every eleven turns of motor shaft 60. The three gear combination will repeat every 9 x 11 = 99 turns of motor shaft 60 (i.e., every 35,640°), exceeding the design travel of the assembly. As such, for any three sensor readings (0-360 degrees), there is only one corresponding total motor angle. With a given motor to handwheel ratio and an initial calibration setting, the absolute handwheel position can be calculated.

In operation, after initialization at startup of controller 52, the absolute handwheel angle can be calculated from one or more of sensors 76, 78, 80 based on the motor to handwheel ratio. Further, if there is a motor sensor failure after initialization, two of sensors 76, 78, 80 can be used to calculate or confirm the motor position to provide steering assist for a limp-home mode.

Controller 52 may include one or more algorithms to calculate the absolute handwheel angle as a function of the positions of the first gear, the second gear, and the third gear. In one embodiment, the algorithm(s) perform the following steps to determine the angle of motor 58, and thus absolute handwheel angle. At step 100, controller 52 reads the angle position of each of sensors 76, 78, 80. At step 102, 8T gear 64 is rolled back (e.g., mathematically) to zero degrees. At step 104, the angles of 9T gear 66 and 11T gear 68 are calculated from the rollback using an index calculated for each gear 66, 68. For example, 9T gear 66 has nine possible positions, with an index of 0 to 8, and 11T gear 68 has eleven possible positions, with an index of 0 to 10. At step 106, a motor turns count is calculated from the gear indexes of gears 66, 68.

At step 108, the motor turns count and the rollback angles are used to calculate absolute motor position. At step 110, absolute handwheel position is calculated based on the absolute motor position (e.g., dividing the absolute motor angle by the known mechanical ratio between the motor and handwheel).

In one example calculation, gears 64, 66, 68 begin at the following positions: 8T gear 64 is at 20 degrees, 9T gear 66 is at 218 degrees, and 11T gear 68 is at 342. Motor 58 (and 8T gear 64) is rolled back 20 degrees to zero degrees, which rotates 9T gear 66 back to 200 degrees (218-20*8/9) and 11T gear 68 back to 327 degrees (342-20*8/11). The gear index of 9T gear 66 is calculated to be 5 (200/(360/9)) and the gear index of 11T gear 68 is calculated to be 10 (327/(360/11)). The motor turns are then calculated from an equation (see example Equation 1 below) or determined from a lookup table (see Table 1 below).

$$\mathrm{mod(mod(A*B,X) + C*D,X)) = Y} \qquad \text{(Equation 1)}$$

where A is the gear index of 9T gear 66, B is the offset between each row in Table 1, X is the total number of turns possible for the design, C is the gear index of 11T gear 68, D is the offset between each column in Table 1, and Y is the number of turns of the motor shaft (or 8T gear 64). An exemplary solution is below:

$$\mathrm{mod(mod(5*44,99) + 10*18,99)) = 4}$$

| 11 T Gear Index | | | | | | | | | | | |
|---|---|---|---|---|---|---|---|---|---|---|---|
| | | 0 | 1 | 2 | 3 | 4 | 5 | 6 | 7 | 8 | 9 | 10 |
| 9 T Gear Index | 0 | 0 | 18 | 36 | 54 | 72 | 90 | 9 | 27 | 45 | 63 | 81 |
| | 1 | 44 | 62 | 80 | 98 | 17 | 35 | 53 | 71 | 89 | 8 | 26 |
| | 2 | 88 | 7 | 25 | 43 | 61 | 79 | 97 | 16 | 34 | 52 | 70 |
| | 3 | 33 | 51 | 69 | 87 | 6 | 24 | 42 | 60 | 78 | 96 | 15 |
| | 4 | 77 | 95 | 14 | 32 | 50 | 68 | 86 | 5 | 23 | 41 | 59 |
| | 5 | 22 | 40 | 58 | 76 | 94 | 13 | 31 | 49 | 67 | 85 | 4 |
| | 6 | 66 | 84 | 3 | 21 | 39 | 57 | 75 | 93 | 12 | 30 | 48 |
| | 7 | 11 | 29 | 47 | 65 | 83 | 2 | 20 | 38 | 56 | 74 | 92 |
| | 8 | 55 | 73 | 91 | 10 | 28 | 46 | 64 | 82 | 1 | 19 | 37 |

Table 1

Accordingly, the absolute motor position is calculated to be 1460 degrees ((4 turns)*360 + (20° rollback) = 1460°). The 4 turns is calculated from equation 1 or read from Table 1. The 20° rollback that was subtracted earlier is now added back to get the resulting absolute motor angle of 1460°. If the motor to handwheel ratio was 25:1, the resulting absolute handwheel would be about 58.4°.

Described herein are systems and methods for calculating the absolute handwheel angle of a steering system. The system includes three gears each with a magnet and associated magnet sensor to determine angular position of the gears. The three gears have different gear ratios such that only one unique angular combination occurs over the maximum revolutions of the vehicle handwheel. As such, even if system power is lost, the absolute handwheel angle can be calculated.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

**Claims**

1. A system for detecting a handwheel position, the system comprising:

   a motor shaft including a first gear having a first magnet and a first plurality of teeth;
   a second gear having a second magnet and a second plurality of teeth, the second plurality of teeth meshingly engaged with the first plurality of teeth;
   a third gear having a third magnet and a third plurality of teeth, the third plurality of teeth meshingly engaged with the first plurality of teeth; and
   at least one magnetic sensor operably associated with the first magnet, the second magnet, and the third magnet, the at least one magnetic sensor configured to detect the positions of the first gear, the second gear, and the third gear.

2. The system of claim 1, further comprising a controller in signal communication with the at least one magnetic sensor, the controller configured to determine an absolute rotational position of the vehicle handwheel based on signals from the at least one magnetic sensor.

3. The system of claim 1, wherein the at least one magnetic sensor comprises a first magnetic sensor operably associated with the first magnet, a second magnetic sensor operably associated with the second magnet, and a third magnetic sensor operably associated with the third magnet.

4. The system of claim 1, further comprising a circuit board, wherein the at least one magnetic sensor is coupled to the circuit board.

5. The system of claim 1, wherein a number of teeth of each of the first plurality of teeth, the second plurality of teeth, and the third plurality of teeth are different from each other.

6. The system of claim 5, wherein the first plurality of teeth includes eight teeth, the second plurality of teeth includes nine teeth, and the third plurality of teeth includes eleven teeth.

7. A steering system comprising:

an input shaft coupled to a handwheel;
a steering assist motor coupled to the input shaft, the steering assist motor including a motor shaft; and
a position sensor assembly operably associated with the steering assist motor, the position sensor assembly comprising:

a first gear having a first plurality of teeth, the first gear coupled to the motor shaft;
a second gear having a second plurality of teeth;
a third gear having a third plurality of teeth; and
a sensor operably associated with the first gear, the second gear, and the third gear, the sensor configured to detect the positions of the first gear, the second gear, and the third gear.

8. The steering system of claim 7, further comprising a controller in signal communication with the sensor, the controller configured to determine an absolute rotational position of the vehicle handwheel based upon the positions of the first gear, the second gear, and the third gear.

9. The steering system of claim 7, further comprising a first magnet coupled to the first gear, a second magnet coupled to the second gear, and a third magnet coupled to the third gear.

10. The steering system of claim 9, wherein the sensor is at least one magnetic sensor configured to detect the positions of the first magnet, the second magnet, and the third magnet.

11. The steering system of claim 10, further comprising a controller in signal communication with the at least one magnetic sensor, the controller configured to determine a rotational position of the first gear, the second gear, and the third gear based on signals from the at least one magnetic sensor.

12. The steering system of claim 10, further comprising a circuit board, wherein the at least one magnetic sensor is coupled to the circuit board.

13. The steering system of claim 10, wherein the at least one magnetic sensor comprises a first magnetic sensor operably associated with the first magnet, a second magnetic sensor operably associated with the second magnet, and a third magnetic sensor operably associated with the third magnet.

14. A method of determining an absolute rotational position of a vehicle handwheel, the method comprising:

monitoring the rotational position of a first gear coupled to a steering assist motor shaft, the first gear having a first plurality of teeth;
monitoring the rotational position of a second gear having a second plurality of teeth meshingly engaged with the first plurality of teeth;
monitoring the rotational position of a third gear having a third plurality of teeth meshingly engaged with the first plurality of teeth; and
determining the absolute rotational position of the vehicle handwheel based on the rotational positions of the first gear, the second gear, and the third gear.

15. A system for detecting a handwheel position, the system comprising:

a motor shaft including a first gear having a first plurality of teeth;
a second gear having a second plurality of teeth, the second plurality of teeth meshingly engaged with the first plurality of teeth;
a third gear having a third plurality of teeth, the third plurality of teeth meshingly engaged with one of the first plurality of teeth or the second plurality of teeth;

at least one sensor operably associated with the first gear, the second gear, and the third gear, the at least one sensor configured to detect the positions of the first gear, the second gear, and the third gear; and

a controller in signal communication with the at least one sensor, the controller configured to determine an absolute rotational position of the handwheel as a function of the positions of the first gear, the second gear, and the third gear.

EP 3 023 743 A1

FIG. 1

8

FIG. 2

Europäisches
Patentamt

European
Patent Office

Office européen
des brevets

## EUROPEAN SEARCH REPORT

Application Number

EP 15 19 4454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/208726 A1 (MOCK M R [US] ET AL) 21 September 2006 (2006-09-21) * paragraphs [0030] - [0039] * * figures * * claims * ----- | 1-15 | INV. G01D5/04 G01D5/14 |
| X | EP 1 437 575 A1 (YASKAWA DENKI SEISAKUSHO KK [JP]) 14 July 2004 (2004-07-14) * abstract * * figures * * claims * ----- | 1-15 | |
| X | US 2008/238416 A1 (SHIRAGA SHOZOH [JP] ET AL) 2 October 2008 (2008-10-02) * abstract * * figures * * claims * * paragraphs [0022] - [0034] * ----- | 1-15 | |
| X | DE 195 06 938 A1 (BOSCH GMBH ROBERT [DE]) 29 August 1996 (1996-08-29) * abstract * * figures * * claims * ----- | 1-15 | TECHNICAL FIELDS SEARCHED (IPC) G01D |

The present search report has been drawn up for all claims

| Place of search | Date of completion of the search | Examiner |
|---|---|---|
| Munich | 4 April 2016 | Moulara, Guilhem |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 19 4454

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2016

| Patent document cited in search report | | Publication date | Patent family member(s) | | Publication date |
|---|---|---|---|---|---|
| US 2006208726 | A1 | 21-09-2006 | BR | PI0609400 A2 | 11-10-2011 |
| | | | CN | 101147044 A | 19-03-2008 |
| | | | EP | 1864087 A1 | 12-12-2007 |
| | | | JP | 2008533497 A | 21-08-2008 |
| | | | US | 2006208726 A1 | 21-09-2006 |
| | | | US | 2007001668 A1 | 04-01-2007 |
| | | | WO | 2006101674 A1 | 28-09-2006 |
| EP 1437575 | A1 | 14-07-2004 | CA | 2463735 A1 | 01-05-2003 |
| | | | CN | 1571916 A | 26-01-2005 |
| | | | DE | 60214410 T2 | 21-12-2006 |
| | | | EP | 1437575 A1 | 14-07-2004 |
| | | | JP | 4258376 B2 | 30-04-2009 |
| | | | KR | 20040058208 A | 03-07-2004 |
| | | | US | 2004246148 A1 | 09-12-2004 |
| | | | WO | 03036237 A1 | 01-05-2003 |
| US 2008238416 | A1 | 02-10-2008 | CN | 101279612 A | 08-10-2008 |
| | | | JP | 4992516 B2 | 08-08-2012 |
| | | | JP | 2008256390 A | 23-10-2008 |
| | | | US | 2008238416 A1 | 02-10-2008 |
| DE 19506938 | A1 | 29-08-1996 | CN | 1175999 A | 11-03-1998 |
| | | | DE | 19506938 A1 | 29-08-1996 |
| | | | DE | 59610354 D1 | 22-05-2003 |
| | | | EP | 0877916 A1 | 18-11-1998 |
| | | | JP | 3792718 B2 | 05-07-2006 |
| | | | JP | H11500828 A | 19-01-1999 |
| | | | US | 5930905 A | 03-08-1999 |
| | | | WO | 9627116 A1 | 06-09-1996 |

EPO FORM P0459

For more details about this annex : see Official Journal of the European Patent Office, No. 12/82